# EUROPÄISCHE PATENTANMELDUNG

(11) **EP 4 030 210 A1**
(43) Veröffentlichungstag der Anmeldung: **20.07.2022**
(21) Anmeldenummer: 22151731.1
(22) Anmeldetag: 17.01.2022
(51) Int. Cl.: G02B 6/38

(54) **STECKVERBINDERVORRICHTUNG, STECKVERBINDER UND ANSCHLUSSKABEL**

(30) Priorität: 19.01.2021 DE 102021101044; 23.04.2021 DE 102021110500
(71) Anmelder: Reichle & De-Massari AG, 8620 Wetzikon (CH)
(72) Erfinder: Hoechli, Remo, 8635 Dürnten (CH); Gyagang, Tensing, 8810 Horgen (CH)
(74) Vertreter: Daub, Thomas

(57) **Zusammenfassung**

Die Erfindung geht aus von einer Steckverbindervorrichtung (10a; 10b; 10c; 10d; 10e), insbesondere einer optischen Steckverbindervorrichtung, mit einem Außengehäuse (14a) und mit einem Innengehäuse (16a; 16b; 16c; 16d; 16e), welches zumindest ein erstes Innengehäuseelement (18a; 18b; 18c; 18d; 18e) und zumindest ein zweites Innengehäuseelement (20a; 20b; 20c; 20d; 20e) aufweist, welche in einem montierten Zustand gemeinsam dazu vorgesehen sind, zumindest ein Steckerelement (22a; 22b; 22c) aufzunehmen.

Es wird vorgeschlagen, dass das erste Innengehäuseelement (18a; 18b; 18c; 18d; 18e) und das zweite Innengehäuseelement (20a; 20b; 20c; 20d; 20e) zumindest einen Aufnahmeabschnitt (24a; 24b; 24c; 24d; 20e) aufweisen, welcher zu einer Aufnahme eines Fixierelements (26a; 26b; 26c; 20e) vorgesehen ist.

## Beschreibung

### Stand der Technik

Die Erfindung betrifft eine Steckverbindervorrichtung, insbesondere eine optische Steckverbindervorrichtung, nach dem Oberbegriff des Anspruchs 1, einen Steckverbinder nach Anspruch 16 und ein Anschlusskabel nach Anspruch 17.

Aus der US 9,696,500 B2 ist bereits ein Steckverbinder bekannt, welcher ein Außengehäuse und ein Innengehäuse, welches zwei Innengehäuseelemente umfasst, aufweist, wobei das Innengehäuse zu einer Aufnahme eines optischen Steckers vorgesehen ist.

Die Aufgabe der Erfindung besteht insbesondere darin, eine gattungsgemäße Steckverbindervorrichtung mit verbesserten Eigenschaften hinsichtlich einer Konstruktion bereitzustellen. Die Aufgabe wird erfindungsgemäß durch die Merkmale der Patentansprüche 1, 16 und 17 gelöst, während vorteilhafte Ausgestaltungen und Weiterbildungen der Erfindung den Unteransprüchen entnommen werden können.

### Vorteile der Erfindung

Die Erfindung geht aus von einer Steckverbindervorrichtung, insbesondere einer optischen Steckverbindervorrichtung, mit einem Außengehäuse und mit einem Innengehäuse, welches zumindest ein erstes Innengehäuseelement und zumindest ein zweites Innengehäuseelement aufweist, welche in einem montierten Zustand gemeinsam dazu vorgesehen sind, zumindest ein Steckerelement aufzunehmen.

Es wird vorgeschlagen, dass das erste Innengehäuseelement und das zweite Innengehäuseelement zumindest einen Aufnahmeabschnitt aufweisen, welcher zu einer Aufnahme eines Fixierelements vorgesehen ist.

Durch eine derartige Ausgestaltung kann insbesondere eine Steckverbindervorrichtung mit verbesserten Eigenschaften hinsichtlich einer Konstruktion bereitgestellt werden. Ferner kann insbesondere eine besonders einfache, schnelle und insbesondere besonders zuverlässige Konfektionierung mittels der Steckverbindervorrichtung erfolgen. Insbesondere kann eine besonders vorteilhafte Zugentlastung durch die Steckverbindervorrichtung bereitgestellt werden. Ferner kann insbesondere eine Zuverlässigkeit und/oder eine Lebensdauer verbessert werden.

Die Steckverbindervorrichtung könnte zumindest als ein Teil, insbesondere als eine Unterbaugruppe, eines Steckverbinders ausgebildet sein. Insbesondere könnte die Steckverbindervorrichtung auch den gesamten Steckverbinder umfassen. Der Steckverbinder könnte beispielsweise als ein elektrischer Steckverbinder ausgebildet sein. Vorzugsweise ist der Steckverbinder als ein optischer Steckverbinder ausgebildet. Denkbar wäre ebenso, dass der Steckverbinder als ein hybrider Steckverbinder ausgebildet ist, welcher sowohl dazu vorgesehen ist, zumindest eine elektrische Steckverbindung als auch zumindest eine optische Steckverbindung herzustellen. Die Steckverbindervorrichtung könnte beispielsweise als eine elektrische Steckverbindervorrichtung ausgebildet sein. Vorzugsweise ist die Steckverbindervorrichtung als eine optische Steckverbindervorrichtung ausgebildet. Denkbar wäre ebenso, dass die Steckverbindervorrichtung als eine hybride Steckverbindervorrichtung ausgebildet ist.

Die Steckverbindervorrichtung weist ein insbesondere zumindest im Wesentlichen vor Umwelteinflüssen geschütztes Außengehäuse auf. Das Außengehäuse ist vorteilhaft zumindest teilweise und vorzugsweise vollständig gegen Umwelteinflüsse abgedichtet. Insbesondere ist das Außengehäuse gegen ein Eindringen von Wasser, beispielsweise Spritzwasser und/oder Regenwasser oder dergleichen, und/oder vorteilhaft gegen ein Eindringen von Staub geschützt, insbesondere abgedichtet. Denkbar wäre, dass das Außengehäuse zur Abdichtung gegenüber den Umwelteinflüssen Dichtelemente umfasst. Beispielsweise könnte das Außengehäuse einen Schutz, insbesondere eine Dichtigkeit, gemäß IP67-Klassifizierung, vorteilhaft gemäß IP68-Klassifizierung, aufweisen. Insbesondere ist die Steckverbindervorrichtung, und insbesondere ein die Steckverbindervorrichtung aufweisender Stecker, für den insbesondere dauerhaften Außeneinsatz geeignet. Unter "zumindest im Wesentlichen" soll in diesem Zusammenhang verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht.

Das Innengehäuse weist insbesondere genau ein erstes Innengehäuseelement und insbesondere genau ein zweites Innengehäuseelement auf. Ein montierter Zustand entspricht insbesondere einem konfektionierten, insbesondere funktionsbereiten, Zustand, und zwar insbesondere in Verbindung mit einem Kabel.

In dem montierten Zustand ist zumindest ein Steckerelement und sind vorzugsweise zumindest zwei Steckerelemente zumindest teilweise zwischen dem ersten Innengehäuseelement und dem zweiten Innengehäuseelement angeordnet, insbesondere aufgenommen. Das zumindest eine Steckerelement, und vorzugsweise die zumindest zwei Steckerelemente, könnten vollständig innerhalb des Innengehäuses, insbesondere zwischen dem ersten Innengehäuseelement und dem zweiten Innengehäuseelement angeordnet sein. Das zumindest eine Steckerelement, und vorzugsweise die zumindest zwei Steckerelemente, könnten in montiertem Zustand zumindest teilweise an dem ersten Innengehäuseelement und/oder dem zweiten Innengehäuseelement montiert, insbesondere fixiert, sein. Die Steckverbindervorrichtung könnte das zumindest eine Steckerelement, vorzugsweise die zumindest zwei Steckerelemente, aufweisen.

Das Steckerelement könnte beispielsweise zumindest einen optischen Stecker und/oder zumindest einen elektrischen Stecker umfassen. Insbesondere könnte das Steckerelement als optischer Stecker und/oder als elektrischer Stecker ausgebildet sein. Das Steckerelement könnte beispielsweise zumindest eine Komponente umfassen, welche im montierten Zustand den optischen Stecker und/oder den elektrischen Stecker hält. Insbesondere könnte das Steckerelement zumindest einen Steckerhalter umfassen. Insbesondere könnte das Steckerelement als ein Steckerhalter ausgebildet sein und im montierten Zustand den optischen Stecker und/oder den elektrischen Stecker halten.

Das erste Innengehäuseelement und das zweite Innengehäuseelement weisen insbesondere jeweils einen Aufnahmeabschnitt auf. Das Fixierelement ist im montierten Zustand zumindest teilweise und vorzugsweise vollständig innerhalb des Aufnahmeabschnitts angeordnet. Insbesondere bildet das erste Innengehäuseelement gemeinsam mit dem zweiten Innengehäuseelement im montierten Zustand den Aufnahmeabschnitt aus. Der Aufnahmeabschnitt ist im montierten Zustand insbesondere ein Teilabschnitt des Innengehäuses, insbesondere bezogen auf eine Axialrichtung der Steckverbindervorrichtung, insbesondere des Steckers. Die Axialrichtung der Steckverbindervorrichtung, insbesondere des Steckers, entspricht insbesondere einer Haupterstreckungsrichtung der Steckverbindervorrichtung, insbesondere des Steckers, wobei diese parallel zu einer längsten Kante eines kleinsten geometrischen Quaders verläuft, welcher die Steckverbindervorrichtung, insbesondere den Stecker, gerade noch vollständig umschließt. Der Aufnahmeabschnitt ist insbesondere an einem Ende des Innengehäuses angeordnet, welches einer in Steckrichtung angeordneten Steckseite der Steckverbindervorrichtung gegenüberliegt. Beispielsweise könnte der Aufnahmeabschnitt als ein Teilabschnitt des Innengehäuses, insbesondere des ersten Innengehäuseelements und des zweiten Innengehäuseelements, welcher beispielsweise eine Länge von mindestens 2 mm, vorteilhaft mindestens 4 mm, besonders vorteilhaft mindestens 6 mm, vorzugsweise mindestens 10 mm und vorzugsweise mindestens 12 mm aufweist, ausgebildet sein.

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass das erste Innengehäuseelement und das zweite Innengehäuseelement jeweils als Innengehäusehalbschalen ausgebildet sind, welche in dem montierten Zustand entlang einer Axialrichtung insbesondere der Steckverbindervorrichtung und/oder des Steckerverbinders miteinander verbunden sind. Das erste Innengehäuseelement und das zweite Innengehäuseelement sind insbesondere als separate Komponenten ausgebildet. Das erste Innengehäuseelement und das zweite Innengehäuseelement könnten, insbesondere zumindest im Wesentlichen und vorzugsweise vollständig identisch, zueinander ausgebildet sein. Insbesondere ist das erste Innengehäuseelement und das zweite Innengehäuseelement als Gussteile, insbesondere Spritzgussteile, ausgebildet. Darunter, dass zumindest ein erstes Element mit zumindest einem weiteren Element "verbunden" ist, soll verstanden werden, dass das erste Element vorteilhaft über zumindest einen Kraftschluss und/oder zumindest einen Formschluss mit dem weiteren Element verbunden ist, beispielsweise über eine Vernietung und/oder Rastverbindung und/oder eine Nut-Feder-Verbindung und/oder eine Klemmverbindung und/oder eine weitere, dem Fachmann als sinnvoll erscheinende Verbindung, und/oder stoffschlüssig mit dem weiteren Element verbunden ist, beispielsweise durch einen Schweißprozess, einen Klebeprozess, einen Anspritzprozess und/oder einen anderen, dem Fachmann als sinnvoll erscheinenden Prozess. Durch eine derartige Ausgestaltung kann insbesondere eine vorteilhafte insbesondere einfache Montage gewährleistet werden. Insbesondere kann durch eine derartige Ausgestaltung insbesondere während einer Montage des Innengehäuses eine Zugänglichkeit des Inneren des Innengehäuses gewahrt werden. Wenn beide Innengehäuseelemente identisch zueinander ausgebildet sind, kann ferner insbesondere eine Effizienz, insbesondere eine Kosteneffizienz, verbessert werden.

Des Weiteren wird vorgeschlagen, dass das erste Innengehäuseelement und das zweite Innengehäuseelement zumindest im Aufnahmeabschnitt eine sich zumindest im Wesentlichen ergänzende Geometrie aufweisen. Im montierten Zustand bilden das erste Innengehäuseelement und das zweite Innengehäuseelement, und zwar insbesondere im Aufnahmeabschnitt, und zwar insbesondere in Axialrichtung betrachtet, eine stetige Form aus. Das erste Innengehäuseelement und das zweite Innengehäuseelement weisen zumindest im Aufnahmeabschnitt eine zumindest im Wesentlichen und vorzugsweise vollständig identisch zueinander ausgebildete Geometrie, insbesondere Formgebung, auf. Insbesondere könnte das erste Innengehäuseelement zu dem zweiten Innengehäuseelement zumindest im Aufnahmeabschnitt spiegelsymmetrisch ausgebildet sein, und zwar insbesondere bezogen auf die Axialrichtung. Durch eine derartige Ausgestaltung können insbesondere verbesserte Eigenschaften hinsichtlich einer Montage gewährleistet werden. Insbesondere kann eine einfache und insbesondere formpassende Aufnahme des Fixierelements im Aufnahmeabschnitt gewährleistet werden. Ferner kann dadurch insbesondere eine Stabilität und/oder eine Zuverlässigkeit und vorzugsweise eine Dichtigkeit verbessert werden.

Zudem wird vorgeschlagen, dass das erste Innengehäuseelement gemeinsam mit dem zweiten Innengehäuseelement im montierten Zustand im Aufnahmeabschnitt einen hohlen Aufnahmezapfen bildet. Der hohle Aufnahmezapfen erstreckt sich insbesondere im Aufnahmeabschnitt, insbesondere in Axialrichtung. Insbesondere weisen das erste Innengehäuseelement und das zweite Innengehäuseelement jeweils einen halben hohlen Aufnahmezapfen auf. Insbesondere bei einer Betrachtung einer Querschnittsfläche des hohlen Aufnahmezapfens ist der Aufnahmezapfen insbesondere flächenbezogen zumindest zu 20 %, vorteilhaft zumindest zu 30 %, besonders vorteilhaft zumindest zu 50 %, vorzugsweise zumindest zu 70 % und besonders bevorzugt zumindest zu 80 %, hohl ausgebildet. Insbesondere könnte der hohle Aufnahmezapfen bei einer Betrachtung in Axialrichtung eine zumindest im Wesentlichen eckige Außenkontur aufweisen. Insbesondere könnte der hohle Aufnahmezapfen bei einer Betrachtung in Axialrichtung eine zumindest im Wesentlichen dreieckige, viereckige oder vieleckige Außenkontur aufweisen. Vorzugsweise weist der hohle Aufnahmezapfen bei einer Betrachtung in Axialrichtung eine zumindest im Wesentlichen runde Außenkontur auf. Durch eine derartige Ausgestaltung kann insbesondere eine vorteilhafte Montage vorgenommen werden. Ferner kann insbesondere eine Stabilität verbessert werden.

Ferner wird vorgeschlagen, dass das Innengehäuse in dem Aufnahmeabschnitt eine Anlagefläche für ein Festigkeitselement eines Kabels aufweist. Insbesondere weist das erste Innengehäuseelement und/oder das zweite Innengehäuseelement eine Anlagefläche für das Festigkeitselement des Kabels auf. Insbesondere ist die Anlagefläche zumindest ein Teil einer Außenfläche des hohlen Aufnahmezapfens. Im montierten Zustand ist zumindest ein Teil des Festigkeitselements des Kabels im Aufnahmeabschnitt an die Anlagefläche des Innengehäuses angelegt. Das Festigkeitselement könnte beispielsweise als eine Festigkeitsfaser oder als eine Vielzahl von Festigkeitsfasern eines optischen Kabels ausgebildet sein. Alternativ oder zusätzlich könnte das Festigkeitselement beispielsweise als ein Beilaufdraht, insbesondere als ein Beilaufdraht eines elektrischen Kabels und/oder hybriden Kabels, ausgebildet sein. Alternativ oder zusätzlich könnte das Festigkeitselement als ein Schirm des optischen Kabels, des elektrischen Kabels und/oder des hybriden Kabels ausgebildet sein. Das Festigkeitselement könnte insbesondere ein Zugentlastungselement sein, welches insbesondere zur Zugentlastung auf das Kabel, insbesondere auf Leitungselemente des Kabels, vorgesehen ist. Durch eine derartige Ausgestaltung kann insbesondere eine hohe Stabilität erzielt werden. Insbesondere kann die Konstruktion der Steckverbindervorrichtung zumindest in Bezug auf eine Zuverlässigkeit verbessert werden.

Des Weiteren wird vorgeschlagen, dass die Steckverbindervorrichtung das Fixierelement aufweist, welches im montierten Zustand das erste Innengehäuseelement und das zweite Innengehäuseelement zumindest teilweise umgreift und miteinander verbindet, insbesondere miteinander fixiert. Insbesondere könnte das Fixierelement das erste Innengehäuseelement und das zweite Innengehäuseelement im montierten Zustand gemeinsam mit weiteren Verbindungsmitteln verbinden. Insbesondere könnten das erste Innengehäuseelement und das zweite Innengehäuseelement im montierten Zustand lediglich mittels des Fixierelements miteinander verbunden, insbesondere miteinander fixiert, sein. Insbesondere ist das Fixierelement zur Montage plastisch verformbar. Denkbar wäre, dass das Fixierelement beispielsweise als ein Kabelbinder und/oder als eine Schelle oder dergleichen ausgebildet ist. Vorzugsweise ist das Fixierelement als ein Crimpelement, insbesondere als ein Crimpring oder eine Crimphülse ausgebildet. Das Fixierelement umgreift das erste Innengehäuseelement und das zweite Innengehäuseelement im Aufnahmeabschnitt zumindest teilweise und vorzugsweise vollständig. Insbesondere umgreift das Fixierelement den hohlen Aufnahmezapfen zumindest teilweise und vorzugsweise vollständig. Durch eine derartige Ausgestaltung können insbesondere verbesserte Eigenschaften hinsichtlich einer Fixierung, insbesondere hinsichtlich einer Stabilität, erzielt werden.

Zudem wird vorgeschlagen, dass das Fixierelement im montierten Zustand dazu vorgesehen ist, das Festigkeitselement an die Anlagefläche zu drücken. Im montierten Zustand fixiert das Fixierelement das Festigkeitselement an dem Innengehäuse, insbesondere an dem ersten Innengehäuseelement und/oder an dem zweiten Innengehäuseelement, insbesondere im Aufnahmeabschnitt, insbesondere an der Anlagefläche. Insbesondere presst das Fixierelement im montierten Zustand das Festigkeitselement an die Anlagefläche, insbesondere zur Fixierung des Festigkeitselements an der Anlagefläche. Durch eine derartige Ausgestaltung kann insbesondere eine einfache und/oder insbesondere besonders effektive Zugentlastung bereitgestellt werden. Ferner kann dadurch eine Montage einer Zugentlastung vereinfacht werden.

Ferner wird vorgeschlagen, dass das Fixierelement eine Kabelkralle aufweist, welche dazu vorgesehen ist, einen Kabelmantel, insbesondere des Kabels, zu verkrallen. Insbesondere verkrallt das Fixierelement im montierten Zustand über die Kabelkralle den Kabelmantel des Kabels. Die Kabelkralle könnte beispielsweise, jedoch nicht beschränkt darauf, als eine, insbesondere in Axialrichtung betrachtet, radial nach innen weisende Kante des Fixierelements ausgebildet sein. Insbesondere handelt es sich bei der Kabelkralle um einen Vorsprung im Inneren des Fixierelements, welches insbesondere umlaufend angeordnet ist. Alternativ oder zusätzlich könnte die Kabelkralle zumindest einen Zacken und/oder zumindest eine Spitze umfassen, welche insbesondere in Axialrichtung betrachtet, radial nach innen weisen. Durch eine derartige Ausgestaltung kann die Konstruktion insbesondere hinsichtlich einer Stabilität weiter verbessert werden. Insbesondere können durch eine derartige Ausgestaltung vorteilhafte Eigenschaften hinsichtlich einer Zugentlastung erzielt werden.

Des Weiteren wird vorgeschlagen, dass das erste Innengehäuseelement und/oder das zweite Innengehäuseelement im montierten Zustand im Aufnahmeabschnitt zumindest eine Fixierkontur aufweist. Insbesondere weisen das erste Innengehäuseelement und das zweite Innengehäuseelement sich ergänzende Fixierteilkonturen auf, wobei die Fixierkontur, insbesondere im montierten Zustand, stetig ausgebildet ist. Insbesondere weist die Fixierkontur einen, insbesondere in Axialrichtung betrachtet, zumindest abschnittsweise und vorzugsweise vollständig um den hohlen Aufnahmezapfen herumlaufenden Vorsprung des Innengehäuses, insbesondere des ersten Innengehäuseelements und/oder des zweiten Innengehäuseelements, auf. Insbesondere ist zumindest ein Teil der Fixierkontur Teil der Anlagefläche. Die Fixierkontur ist insbesondere im montierten Zustand dazu vorgesehen, das Festigkeitselement im Aufnahmeabschnitt, insbesondere an der Anlagefläche, und insbesondere durch Anpressen mittels des Fixierelements, zu verkrallen. Insbesondere wäre denkbar, dass das Fixierelement eine entsprechende weitere Fixierkontur aufweist, und zwar insbesondere in Axialrichtung betrachtet im Inneren des Fixierelements. Durch eine derartige Ausgestaltung kann die Konstruktion insbesondere hinsichtlich einer Stabilität, insbesondere eine vorteilhafte Zugentlastung, bereitgestellt werden.

Des Weiteren wird vorgeschlagen, dass das Fixierelement im montierten Zustand einen ersten Querschnitt mit einem ersten Innendurchmesser und zumindest einen zweiten Querschnitt mit einem von dem ersten Innendurchmesser wesentlich verschiedenen zweiten Innendurchmesser aufweist. Insbesondere ist der erste Innendurchmesser des ersten Querschnitts des Fixierelements im montierten Zustand beispielsweise zumindest um 5 %, vorteilhaft zumindest um 7 %, besonders vorteilhaft zumindest um 10 %, vorzugsweise zumindest um 12,5 % und besonders bevorzugt zumindest um 15 % größer als der zweite Innendurchmesser des zweiten Querschnitts des Fixierelements. Insbesondere ist der erste Innendurchmesser des ersten Querschnitts des Fixierelements im montierten Zustand beispielsweise höchstens um 25 %, vorteilhaft höchstens um 22,5 %, besonders vorteilhaft höchstens um 20 %, vorzugsweise höchstens um 17,5 % und besonders bevorzugt höchstens um 16 % größer als der zweite Innendurchmesser des zweiten Querschnitts des Fixierelements. Insbesondere ist eine Innenkontur des Fixierelements im montierten Zustand zumindest teilweise an die Fixierkontur angepasst. Insbesondere ist das Fixierelement, insbesondere in einem vorgekrimpten Zustand, mittels einer ersten Krimpstufe zumindest an ein Außenmaß der Fixierkontur gekrimpt. Vorteilhaft ist das Fixierelement im montierten Zustand mittels einer weiteren Krimpstufe zudem an ein Innenmaß der Fixierkontur gekrimpt, wobei insbesondere das Festigkeitselement des Kabels im montierten Zustand zwischen der Fixierkontur des Fixierelements und der Anlagefläche angeordnet ist. Insbesondere ist das Fixierelement im montierten Zustand querschnittlich betrachtet wellenförmig ausgebildet. Insbesondere weist das Fixierelement im montierten Zustand eine Mehrzahl von Rippen auf. Vorzugsweise weist der Aufnahmeabschnitt eine Mehrzahl von Rippen auf, so, dass dadurch eine zu dem Fixierelement korrespondierende Formgebung bereitgestellt ist. Im montierten Zustand ist das Festigkeitselement des Kabels wellenförmig zwischen dem Fixierelement und dem Aufnahmeabschnitt angeordnet. Durch eine derartige Ausgestaltung kann insbesondere eine Festigkeit, und zwar insbesondere eine Zugfestigkeit erhöht werden. Insbesondere kann dadurch erreicht werden, dass das Festigkeitselement des Kabels im montierten Zustand zwischen der Kontur des Fixierelements und des Aufnahmeabschnitts entlang geschlängelt ist, wodurch die Zugfestigkeit weiter erhöht werden kann. Bei einem Verfahren zur Herstellung der Steckverbindervorrichtung wird das Fixierelement in einem ersten Schritt mittels einer ersten Krimpstufe an ein Außenmaß der Fixierkontur gekrimpt, wobei insbesondere das Festigkeitselement des Kabels zwischen der Fixierkontur und dem Fixierelement angeordnet wird. Insbesondere wird das Fixierelement in dem ersten Schritt mittels einer runden Krimpform an das Außenmaß der Fixierkontur gekrimpt. In einem zweiten Schritt wird das Fixierelement mittels einer zweiten Krimpstufe an ein Innenmaß der Fixierkontur gekrimpt. Insbesondere wird in dem zweiten Schritt das Fixierelement mittels einer zweiten Krimpform, welche insbesondere Rillen aufweist, an das Innenmaß der Fixierkontur gekrimpt.

Zudem wird vorgeschlagen, dass die Steckverbindervorrichtung zumindest ein Verstärkungselement aufweist, welches im montierten Zustand im Aufnahmeabschnitt zwischen dem ersten Innengehäuseelement und dem zweiten Innengehäuseelement, insbesondere innerhalb des Aufnahmezapfens, angeordnet ist. Insbesondere ist das Verstärkungselement im Aufnahmeabschnitt in einem Hohlraum des hohlen Aufnahmezapfens angeordnet. Das Verstärkungselement kann insbesondere als ein Stift, beispielsweise als ein Metallstift, ausgebildet sein. Insbesondere kann das Verstärkungselement innen hohl ausgebildet sein. Vorzugsweise weist das Verstärkungselement einen zumindest im Wesentlichen runden Querschnitt auf, wodurch insbesondere eine besonders hohe Festigkeit im Aufnahmeabschnitt bereitgestellt werden kann. Insbesondere ist das Verstärkungselement als eine Hülse, insbesondere als eine metallische Hülse, ausgebildet. Vorzugsweise weist das Verstärkungselement auf die Axialrichtung der Steckverbindervorrichtung eine Länge auf, welche im Wesentlichen einer entsprechenden Länge des Fixierelements entspricht. Durch eine derartige Ausgestaltung kann insbesondere eine Montage des Fixierelements mittels einer insbesondere höheren Crimpkraft vorgenommen werden. Ferner kann das Innengehäuseelement durch das Verstärkungselement im montierten Zustand verstärkt werden. Insbesondere kann im Aufnahmeabschnitt eine höhere Festigkeit und damit insbesondere eine höhere Stabilität und/oder eine verbesserte Lebensdauer gewährleistet werden.

In einem weiteren Aspekt der Erfindung, welcher insbesondere für sich allein genommen oder gemeinsam mit anderen Aspekten der Erfindung betrachtet werden kann, wird vorgeschlagen, dass das Innengehäuse wenigstens eine Führungseinheit aufweist, welche dazu vorgesehen ist, zumindest ein Leitungselement insbesondere zu dem Steckerelement zu führen. Insbesondere könnte zumindest ein Teil der Führungseinheit Teil des ersten Innengehäuseelements und/oder des zweiten Innengehäuseelements sein. Durch eine derartige Ausgestaltung kann insbesondere eine Zuverlässigkeit erhöht werden. Insbesondere kann dadurch eine Beschädigung des Leitungselements vermieden werden.

Des Weiteren wird vorgeschlagen, dass die Führungseinheit dazu vorgesehen ist, einen Krümmungsradius des Leitungselements im Innengehäuse auf einen Mindestradius zu begrenzen. Insbesondere ist die Führungseinheit dazu vorgesehen, den Krümmungsradius des Leitungselements im Innengehäuse derart zu begrenzen, dass der Krümmungsradius des Leistungselements im Innengehäuse im montierten Zustand beispielsweise mindestens ein Fünffaches eines Leitungsquerschnitts des Leitungselements, vorteilhaft mindestens ein 7,5-faches eines Leitungsquerschnitts des Leitungselements, besonders vorteilhaft mindestens ein Zehnfaches eines Leitungsquerschnitts des Leitungselements, vorzugsweise mindestens ein Fünfzehnfaches eines Leitungsquerschnitts des Leitungselements, besonders bevorzugt mindestens ein Zwanzigfaches eines Leitungsquerschnitts des Leitungselements, beträgt. Durch eine derartige Ausgestaltung kann insbesondere eine hohe Zuverlässigkeit gewährleistet werden. Insbesondere kann dadurch eine Beschädigung des Leitungselements vermieden werden. Ferner kann dadurch eine vorteilhafte Datenübertragung über das Leitungselement gewährleistet werden.

Zudem wird vorgeschlagen, dass das erste Innengehäuseelement und das zweite Innengehäuseelement jeweils einen Führungsteilkanal zur Führung des Leitungselements, insbesondere zu dem Steckerelement, umfassen. Insbesondere bilden das erste Innengehäuseelement und das zweite Innengehäuseelement im montierten Zustand einen Führungskanal zur Führung des Leitungselements, insbesondere zu dem Steckerelement, aus. Insbesondere kann durch eine derartige Ausgestaltung das Leitungselement in einer Montageposition gehalten werden, was insbesondere eine Montage und/oder eine Konfektionierung vereinfacht. Durch eine derartige Ausgestaltung kann insbesondere eine Beschädigung des Leitungselements, insbesondere während einer Montage und/oder bei Tieftemperaturen, verhindert werden.

Ferner wird vorgeschlagen, dass das erste Innengehäuseelement und/oder das zweite Innengehäuseelement in dem Führungsteilkanal mindestens ein Halteelement zum Halten des Leitungselements in dem Führungsteilkanal aufweisen. Insbesondere ist das Halteelement als ein Niederhalteelement ausgebildet. Insbesondere ist das als Niederhalteelement ausgebildete Halteelement im montierten Zustand frei von einer Klemmung des Leitungselements. Denkbar wäre beispielsweise, dass das Halteelement als ein Kabelclip ausgebildet ist. Des Weiteren wäre denkbar, dass das Halteelement als eine flexible Kunststofflippe ausgebildet ist, welche dazu vorgesehen ist, das zumindest eine Leitungselement in einem montierten Zustand festzuklemmen. Denkbar wäre zudem, dass das Halteelement zumindest ein axiales Verschieben des Leitungselements durch Festhalten des Leitungselements verhindert. Durch eine derartige Ausgestaltung kann insbesondere eine hohe Zuverlässigkeit gewährleistet werden. Insbesondere kann dadurch eine Beschädigung des Leitungselements vermieden werden. Ferner kann dadurch eine vorteilhafte Datenübertragung über das Leitungselement gewährleistet werden.

Des Weiteren wird vorgeschlagen, dass das erste Innengehäuseelement und das zweite Innengehäuseelement jeweils einen zweiten Führungsteilkanal zur Führung eines weiteren Leitungselements, insbesondere zu dem Steckerelement, umfassen. Insbesondere bilden das erste Innengehäuseelement und das zweite Innengehäuseelement im montierten Zustand einen zweiten Führungskanal zur Führung des Leitungselements, insbesondere zu dem Steckerelement, aus. Insbesondere kann durch eine derartige Ausgestaltung das Leitungselement in einer Montageposition gehalten werden, was insbesondere eine Montage und/oder eine Konfektionierung vereinfacht. Durch eine derartige Ausgestaltung kann insbesondere eine Beschädigung des Leitungselements, insbesondere während einer Montage und/oder bei Tieftemperaturen, verhindert werden.

Die Erfindung betrifft zudem einen Steckverbinder, insbesondere einen optischen Steckverbinder, mit der Steckverbindervorrichtung. Durch einen derartigen Steckverbinder können verbesserte Eigenschaften hinsichtlich einer Konstruktion bereitgestellt werden.

Die Erfindung betrifft zudem ein Anschlusskabel, insbesondere ein optisches Anschlusskabel, mit dem zumindest einen Steckverbinder und mit einem Kabel, welches mit dem Steckverbinder konfektioniert ist. Ein derartiges Anschlusskabel stellt insbesondere verbesserte Eigenschaften hinsichtlich einer Zuverlässigkeit und/oder hinsichtlich einer Konfektionierung bereit.

Die erfindungsgemäße Steckverbindervorrichtung soll hierbei nicht auf die oben beschriebene Anwendung und Ausführungsform beschränkt sein. Insbesondere kann die erfindungsgemäße Steckverbindervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Einen Steckverbinder mit einer Steckverbindervorrichtung in einer Explosionsdarstellung,
- Fig. 2: den Steckverbinder in einem montierten Zustand in einer schematischen perspektivischen Darstellung,
- Fig. 3: die Steckverbindervorrichtung mit einem Innengehäuse und mit einem Fixierelement in einer schematischen perspektivischen Darstellung,
- Fig. 4: eine perspektivische Schnittdarstellung des Innengehäuses mit einem ersten Innengehäuseelement und mit einem zweiten Innen-gehäuseelement,
- Fig. 5: einen Teil des Innengehäuses mit dem ersten Innengehäuseelement und mit einer Anlagefläche für ein Festigkeitselement eines Kabels,
- Fig. 6: das Innengehäuse mit dem in einem Aufnahmeabschnitt des Innengehäuses aufgenommenen Fixierelement,
- Fig. 7: eine Steckverbindervorrichtung eines weiteren Ausführungsbeispiels in einer schematischen perspektivischen Darstellung,
- Fig. 8: einen Teil der Steckverbindervorrichtung mit einem Teil eines Innengehäuses der Steckverbindervorrichtung mit einem ersten Innengehäuseelement in einer schematischen perspektivischen Darstellung,
- Fig. 9: eine Steckverbindervorrichtung eines weiteren Ausführungsbeispiels in einer schematischen perspektivischen Darstellung,
- Fig. 10: einen Teil der Steckverbindervorrichtung mit einem Teil eines Innengehäuses der Steckverbindervorrichtung mit einem ersten Innengehäuseelement in einer schematischen perspektivischen Darstellung,
- Fig. 11: eine Steckverbindervorrichtung eines weiteren Ausführungsbeispiels mit einer Zentriereinheit in einer schematischen perspektivischen Darstellung,
- Fig. 12: ein Teil einer Steckverbindervorrichtung eines weiteren Ausführungsbeispiels in einem vormontierten Zustand in einer perspektivischen Darstellung,
- Fig. 13: die Steckverbindervorrichtung mit einem Teil eines Innengehäuses der Steckverbindervorrichtung mit einem ersten Innengehäuseelement in einem vormontierten Zustand in einer schematischen perspektivischen Schnittdarstellung,
- Fig. 14: die Steckverbindervorrichtung mit einem Fixierelement in einem montierten Zustand in einer perspektivischen Darstellung,
- Fig. 15: die Steckverbindervorrichtung mit einem Fixierelement in einem montierten Zustand in einer schematischen perspektivischen Schnittdarstellung und
- Fig. 16: ein Flussdiagramm eines Verfahrens zur Herstellung einer Steckverbindervorrichtung.

### Beschreibung der Ausführungsbeispiele

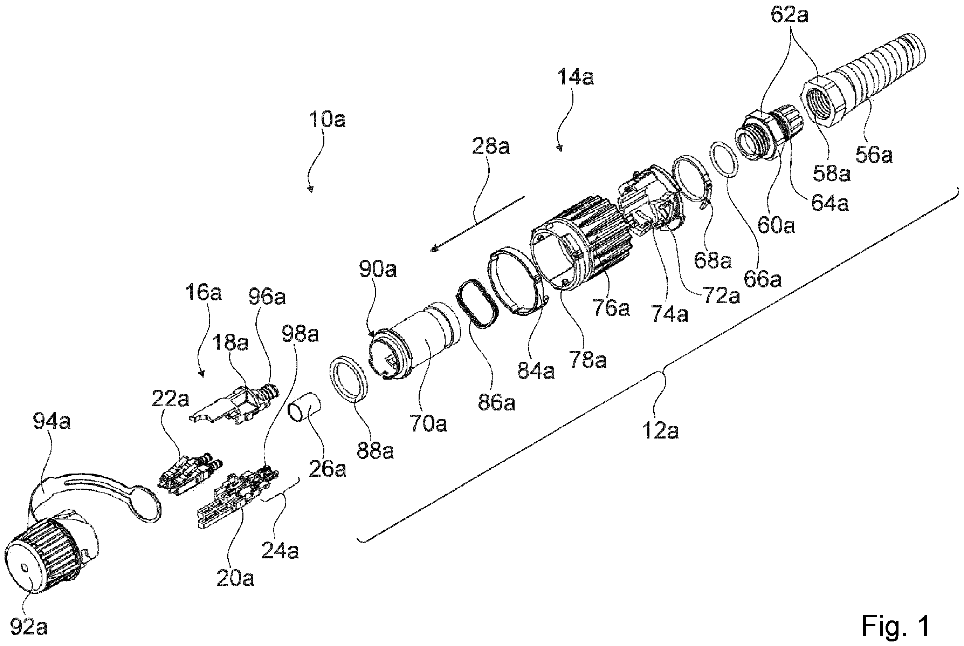

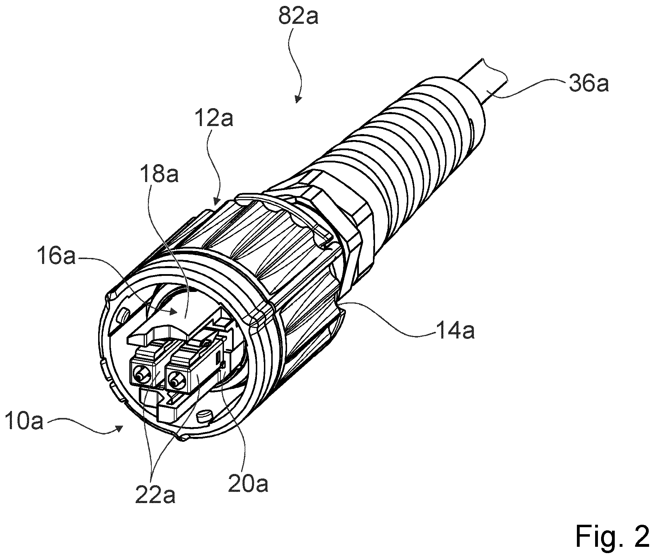

Figur 1 zeigt einen Steckverbinder 12a in einer Explosionsdarstellung. Figur 2 zeigt ein Anschlusskabel 82a, welches als ein optisches Anschlusskabel ausgebildet ist. Das Anschlusskabel 82a umfasst den Steckverbinder 12a und ein Kabel 36a, welches mit dem Steckverbinder 12a konfektioniert ist. Der Steckverbinder 12a ist als ein optischer Steckverbinder ausgebildet. Der Steckverbinder 12a weist eine Steckverbindervorrichtung 10a auf (vgl. Figuren 1 und 2). Der Steckverbinder 12a ist gegen Umwelteinflüsse abgedichtet und zum Außeneinsatz geeignet.

Die Steckverbindervorrichtung 10a weist ein Außengehäuse 14a auf. Das Außengehäuse 14a umfasst eine Muffe 56a. Die Muffe 56a ist aus einem flexiblen Kunststoff gebildet. Die Muffe 56a ist dazu vorgesehen, ein Knicken eines Kabels zu verhindern und dem Kabel eine Zugentlastung bereitzustellen. Die Muffe 56a weist ein Innengewinde 58a auf, mittels welchem die Muffe 56a auf eine Kabelverschraubung 60a des Außengehäuses 14a schraubbar ist.

Die Kabelverschraubung 60a und die Muffe 56a weisen jeweils eine sechseckige Werkzeugaufnahme 62a auf, welche insbesondere zur Aufnahme eines Gabelschlüssels vorgesehen ist. Die Kabelverschraubung 60a weist ein zu dem Innengewinde 58a korrespondierendes Außengewinde 64a auf. Das Außengehäuse 14a weist zudem ein Dichtelement 66a auf.

Zudem umfasst das Außengehäuse 14a einen Kabelbinder 68a, welcher im montierten Zustand um eine Hülse 70a befestigt wird, insbesondere um ein ungewolltes Verrutschen einer Schiebemuffe 72a des Außengehäuses 14a zu verhindern. Die Schiebemuffe 72a weist eine Mehrzahl von Ausnehmungen auf, welche gemeinsam eine dreieckförmige Nut 74a bilden.

Im montierten Zustand nimmt die Nut 74a eine Mehrzahl von Stiften 78a eines Betätigungselements 76a des Außengehäuses 14a auf. Das Betätigungselement 76a ist drehbar. Durch Drehen des Betätigungselements 76a ist die Schiebemuffe 72a verschiebbar, und zwar durch entsprechende Kraftübertragung durch die Stifte 78a an die Nut 74a. Durch Drehen des Betätigungselements 76a und dadurch bewirktes Verschieben der Schiebemuffe 72a wird ein Verriegelungsmechanismus des Steckverbinders 12a betätigt.

Das Außengehäuse 14a weist zudem ein Kodierungsmittel 84a auf. Das Kodierungsmittel 84a ist als ein Farbkodierungsring ausgebildet. Im montierten Zustand sitzt das als Farbkodierungsring ausgebildete Kodierungsmittel 84a in einer entsprechenden Ausnehmung des Betätigungselements 76a. Das Kodierungsmittel 84a ist im montierten Zustand von außen sichtbar.

Das Außengehäuse 14a weist zudem ein Federelement 86a auf. Das Federelement 86a ist als eine Wellenfeder ausgebildet. Im montierten Zustand ist das Federelement 86a auf die Hülse 70a geschoben. Das Federelement 86a stellt im montierten Zustand eine auf das Betätigungselement 76a wirkende Federkraft bereit. Im montierten Zustand verhindert die Federkraft ein ungewolltes Lösen des Steckverbinders 12a.

Die Hülse 70a ist hohl ausgebildet und weist eine im Wesentlichen zylindrische Form auf. Die Hülse 70a ist insbesondere frei von Ausrichtungsmitteln. Die Hülse 70a weist ein Innengewinde (nicht dargestellt) auf, mittels welchem die Hülse 70a mit einem korrespondierenden Außengewinde der Kabelverschraubung 60a verschraubbar ist. Das Außengehäuse 14a weist zudem einen O-Ring 88a auf. Der O-Rin 88a sitzt im montierten Zustand in einer Ausnehmung 90a der Hülse 70a.

Der O-Ring 88a dient zur weiteren Abdichtung des Außengehäuses 14a vor Umwelteinflüssen.

Das Außengehäuse 14a weist zudem einen Verschluss 92a auf. Der Verschluss 92a ist als eine Staubschutzkappe ausgebildet. Der Verschluss 92a weist ein Befestigungsmittel 94a auf. Mittels des Befestigungsmittels 94a ist der Verschluss 92a im montierten Zustand befestigt. Das Befestigungsmittel 94a ist als eine flexible Schlaufe ausgebildet.

Die Steckverbindervorrichtung 10a weist zudem ein Innengehäuse 16a auf. Das Innengehäuse 16a weist ein erstes Innengehäuseelement 18a auf. Zudem weist das Innengehäuse 16a ein zweites Innengehäuseelement 20a auf.

Die Steckverbindervorrichtung 10a weist zwei Steckerelemente 22a auf. Das erste Innengehäuseelement 18a und das zweite Innengehäuseelement 20a sind in montiertem Zustand dazu vorgesehen, die zwei Steckerelemente 22a aufzunehmen (vgl. Figuren 1 und 2).

Das erste Innengehäuseelement 18a und das zweite Innengehäuseelement 20a weisen einen Aufnahmeabschnitt 24a auf. Der Aufnahmeabschnitt 24a ist in Axialrichtung 28a betrachtet an einer einer Steckseite des Steckverbinders 12a gegenüberliegenden Seite des Innengehäuses 16a angeordnet. Der Aufnahmeabschnitt 24a ist dazu vorgesehen, ein Fixierelement 26a aufzunehmen.

Das erste Innengehäuseelement 18a und das zweite Innengehäuseelement 20a sind jeweils als Innengehäusehalbschalen ausgebildet. Das erste Innengehäuseelement 18a und das zweite Innengehäuseelement 20a sind im montierten Zustand entlang der Axialrichtung 28a miteinander verbunden.

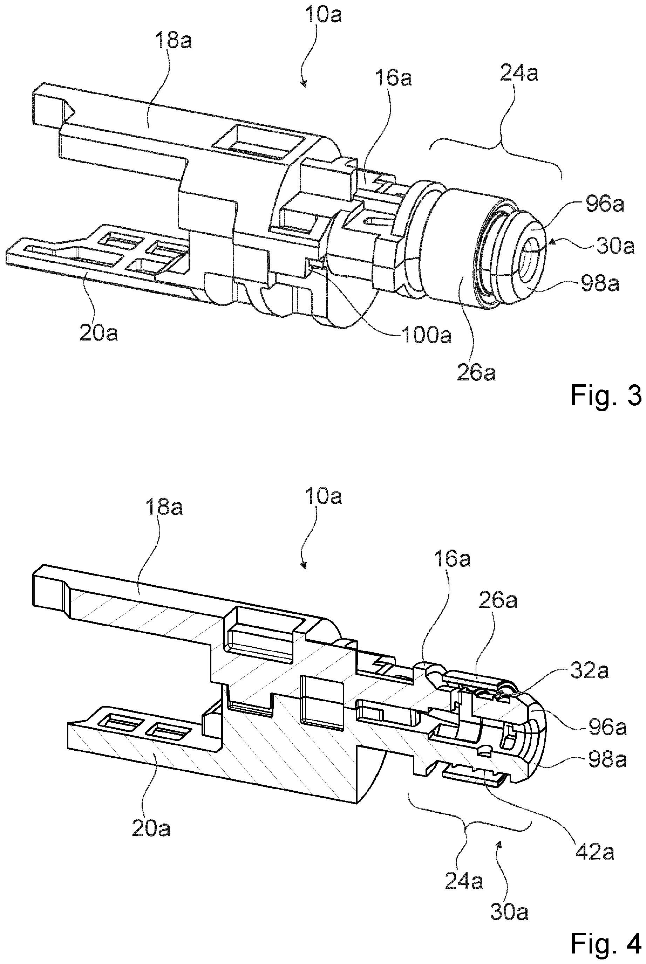

Das erste Innengehäuseelement 18a und das zweite Innengehäuseelement 20a weisen zumindest im Aufnahmeabschnitt 24a eine sich ergänzende Geometrie auf (vgl. Figuren 3 und 4). Im montierten Zustand bilden das erste Innengehäuseelement 18a und das zweite Innengehäuseelement 20a einen stetigen Aufnahmeabschnitt 24a aus. Im dargestellten Beispiel weisen das erste Innengehäuseelement 18a und das zweite Innengehäuseelement 20a im Aufnahmeabschnitt 24a eine im Wesentlichen halbhohlzylindrische Formgebung auf.

Das erste Innengehäuseelement 18a weist im Aufnahmeabschnitt 24a einen ersten Teilzapfen 96a auf. Das zweite Innengehäuseelement 20a weist im Aufnahmeabschnitt 24a einen zweiten Teilzapfen 98a auf. Das erste Innengehäuseelement 18a bildet gemeinsam mit dem zweiten Innengehäuseelement 20a im montierten Zustand im Aufnahmeabschnitt 24a einen hohlen Aufnahmezapfen 30a.

Die Steckverbindervorrichtung 10a weist zudem das Fixierelement 26a auf. Das Fixierelement 26a verbindet im montierten Zustand das erste Innengehäuseelement 18a und das zweite Innengehäuseelement 20a zumindest teilweise. Das erste Innengehäuseelement 18a und das zweite Innengehäuseelement 20a weisen zu einer Verbindung miteinander in dem gezeigten Beispiel zudem Rastmittel 100a auf.

Das Fixierelement 26a ist in dem dargestellten Ausführungsbeispiel als ein Crimpring ausgebildet. Das Fixierelement 26a umgreift im montierten Zustand das erste Innengehäuseelement 18a und das zweite Innengehäuseelement 20a im Aufnahmeabschnitt 24a vollständig. Das Fixierelement 26a umgreift im montierten Zustand den Aufnahmezapfen 30a im Aufnahmeabschnitt 24a.

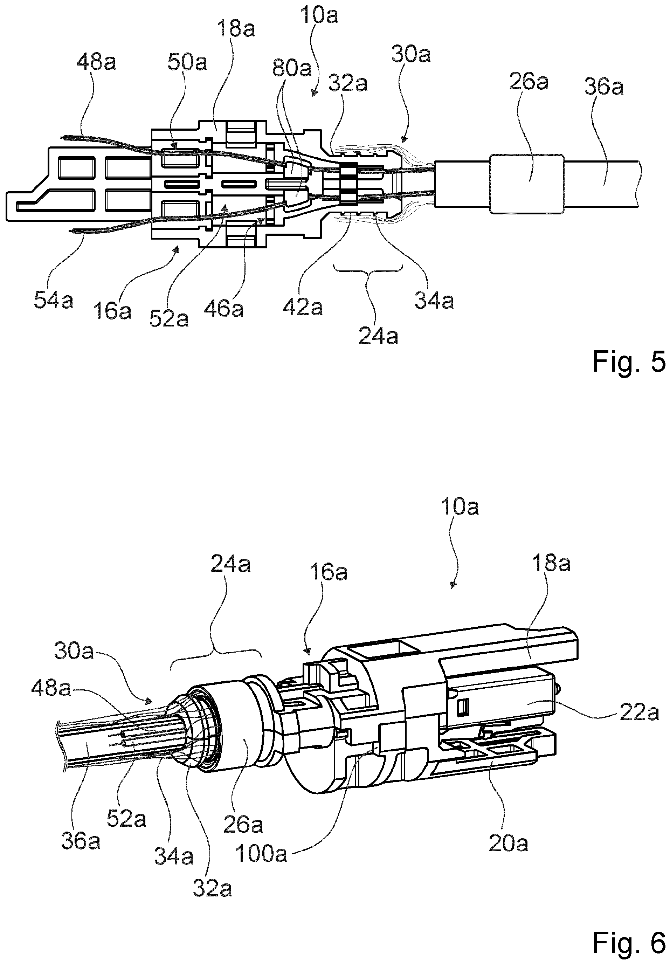

Das Innengehäuse 16a weist in dem Aufnahmeabschnitt 24a eine Anlagefläche 32a für ein Festigkeitselement 34a des Kabels 36a auf (vgl. Figuren 5 und 6). Das Festigkeitselement 34a des Kabels 36a ist als Verstärkungsfasern des Kabels 36a ausgebildet. Die Anlagefläche 32a für das Festigkeitselement 34a des Kabels 36a ist eine Außenfläche des hohlen Aufnahmezapfens 30a im Aufnahmeabschnitt 24a.

Das Fixierelement 26a ist im montierten Zustand dazu vorgesehen, das Festigkeitselement 34a an die Anlagefläche 32a zu drücken. Das Fixierelement 26a ist im montierten Zustand dazu vorgesehen, das Festigkeitselement 34a gegen den hohlen Aufnahmezapfen 30a im Aufnahmeabschnitt 24a zu pressen.

Das erste Innengehäuseelement 18a weist im Aufnahmeabschnitt eine Fixierkontur 42a auf. Zudem weist das zweite Innengehäuseelement 20a im Aufnahmeabschnitt 24a eine Fixierkontur 42a auf. Die Fixierkontur 42a umfasst eine Mehrzahl von radialen Erhöhungen. Die Fixierkontur 42a dient der zusätzlichen Fixierung des Festigkeitselements 34a am Aufnahmezapfen 30a.

Das Innengehäuse 16a weist eine Führungseinheit 46a auf. Die Führungseinheit 46a ist dazu vorgesehen, zumindest ein Leitungselement 48a des Kabels 36a zu führen. Die Führungseinheit 46a ist im montierten Zustand dazu vorgesehen, das zumindest eine Leitungselement 48a zu dem Steckerelement 22a zu führen. Das zumindest eine Leitungselement 48a ist im gezeigten Beispiel eine optische Faser, insbesondere ein Lichtwellenleiter, des Kabels 36a.

Die Führungseinheit 46a ist zudem dazu vorgesehen ist, einen Krümmungsradius des Leitungselements 48a im Innengehäuse 16a auf einen Mindestradius zu begrenzen. Im dargestellten Beispiel ist die Führungseinheit 46a dazu vorgesehen, den Krümmungsradius des Leitungselements 48a im Innengehäuse 16a auf mindestens ein Fünfzehnfaches eines Leitungsdurchmessers des Leitungselements 48a zu begrenzen.

Zur Führung des Leitungselements 48a, insbesondere zu dem Steckerelement 22a, weist das erste Innengehäuseelement 18a einen Führungsteilkanal 50a auf. Zur Führung eines weiteren Leitungselements 54a des Kabels 36a, insbesondere zu dem Steckerelement 22a, weist das erste Innengehäuseelement 18a einen zweiten Führungsteilkanal 52a auf. Das zweite Innengehäuseelement 20a weist zu den Führungsteilkanälen identische Führungsteilkanäle auf.

Der Führungsteilkanal 50a und der zweite Führungsteilkanal 52a sind Teil der Führungseinheit 46a. Der Führungsteilkanal 50a und der zweite Führungsteilkanal 52a sind dazu vorgesehen, das Leitungselement 48a und das weitere Leitungselement 54a, insbesondere in einem vormontierten Zustand, in einer Montageposition zu halten. Der Führungsteilkanal 50a und der zweite Führungsteilkanal 52a sind zudem dazu vorgesehen, ein Wellen des Leitungselements 48a und des weiteren Leitungselements 54a, insbesondere bei Tieftemperaturen, zu verhindern.

Das erste Innengehäuseelement 18a weist in dem Führungsteilkanal 50a ein Halteelement 80a zum Halten des Leitungselements 48a auf. Das zweite Innengehäuseelement 20a weist in dem zweiten Führungsteilkanal 50a ein Halteelement 80a zum Halten des weiteren Leitungselements 48a auf.

Die Halteelemente 80a sind insbesondere dazu vorgesehen, das Leitungselement 48a und das weitere Leitungselement 54a insbesondere in Axialrichtung zu fixieren. Die Halteelemente 80a verhindern ein Ausstoßen des Leitungselements 48a und des weiteren Leitungselements 54a aus einem Kabelmantel des Kabels 36a. Die Halteelemente 80a sind als flexible Laschen ausgebildet, welche dazu vorgesehen sind, das Leitungselement 48a und das weitere Leitungselement 54a im montierten Zustand zu verklemmen.

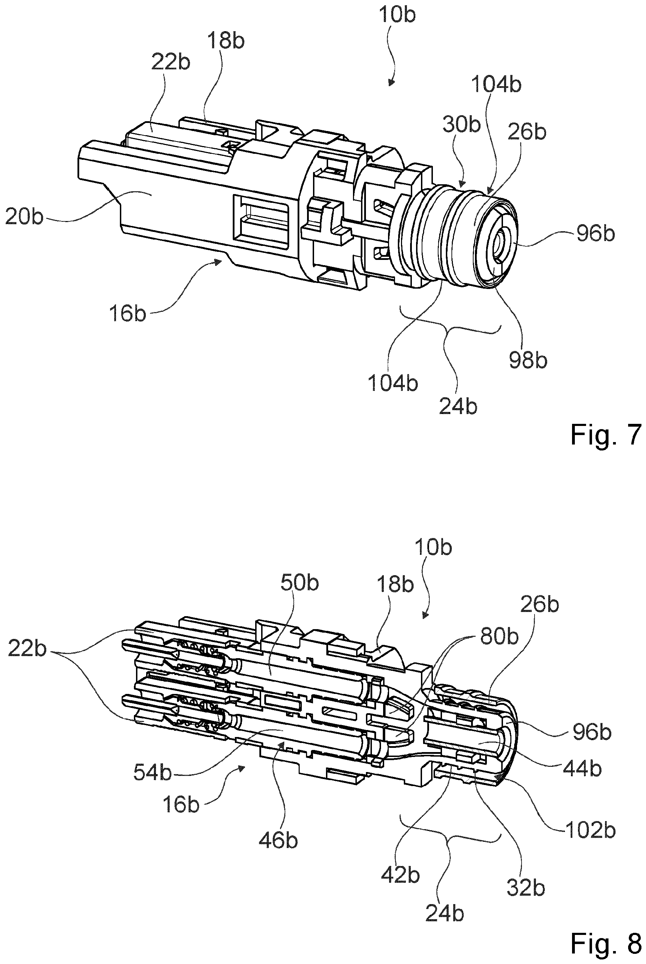

In den Figuren 7 bis 16 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 16 ist der Buchstabe a durch die Buchstaben b bis e ersetzt.

Figuren 7 und 8 zeigen eine Steckverbindervorrichtung 10b eines weiteren Ausführungsbeispiels der Erfindung. Die Steckverbindervorrichtung 10b weist ein Innengehäuse 16b auf. Das Innengehäuse 16b weist ein erstes Innengehäuseelement 18b auf. Zudem weist das Innengehäuse 16b ein zweites Innengehäuseelement 20b auf.

Die Steckverbindervorrichtung 10b weist zwei Steckerelemente 22b auf. Das erste Innengehäuseelement 18b und das zweite Innengehäuseelement 20b sind in montiertem Zustand dazu vorgesehen, die zwei Steckerelemente 22b aufzunehmen.

Das erste Innengehäuseelement 18b und das zweite Innengehäuseelement 20b weisen einen Aufnahmeabschnitt 24b auf. Das erste Innengehäuseelement 18b bildet gemeinsam mit dem zweiten Innengehäuseelement 20b im montierten Zustand im Aufnahmeabschnitt 24b einen hohlen Aufnahmezapfen 30b. Der Aufnahmeabschnitt 24b ist dazu vorgesehen, ein Fixierelement 26b aufzunehmen.

Das Innengehäuse 16b weist ein Verstärkungselement 44b auf. Das Verstärkungselement 44b ist als eine Metallhülse ausgebildet. Das Verstärkungselement 44b ist im montierten Zustand im Aufnahmeabschnitt 24b zwischen dem ersten Innengehäuseelement 18b und dem zweiten Innengehäuseelement 20b, insbesondere innerhalb des Aufnahmezapfens 30b, angeordnet.

Das erste Innengehäuseelement 18b weist im Aufnahmeabschnitt eine Fixierkontur 42b auf. Zudem weist das zweite Innengehäuseelement 20b im Aufnahmeabschnitt 24b eine Fixierkontur 42b auf. Die Fixierkontur 42b umfasst eine Mehrzahl von radialen Erhöhungen.

Das Fixierelement 26b weist an einer Außenseite eine weitere Fixierkontur 104b auf. Die weitere Fixierkontur 104b dient zur kraft- und/oder formschlüssigen Aufnahme eines Werkzeugs, insbesondere eines Crimpwerkzeugs. Der Aufnahmezapfen 30b weist ein eng zulaufendes Ende, insbesondere eine Fase 102b, auf.

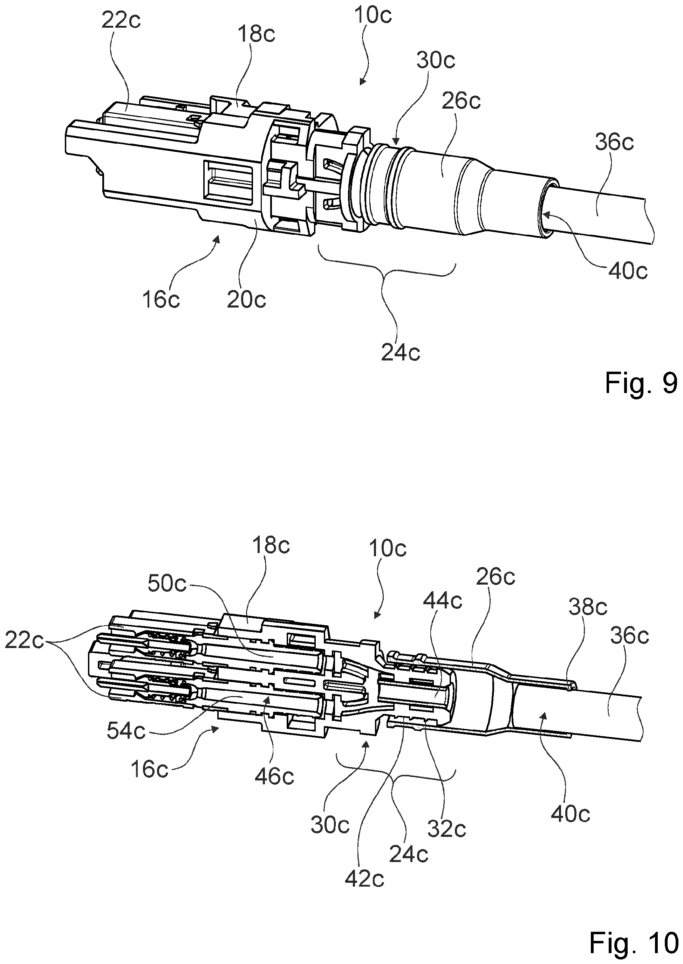

Figuren 9 und 10 zeigen eine Steckverbindervorrichtung 10c eines weiteren Ausführungsbeispiels der Erfindung. Die Steckverbindervorrichtung 10c weist ein Innengehäuse 16c auf. Das Innengehäuse 16c weist ein erstes Innengehäuseelement 18c auf. Zudem weist das Innengehäuse 16c ein zweites Innengehäuseelement 20c auf.

Das erste Innengehäuseelement 18c und das zweite Innengehäuseelement 20c weisen einen Aufnahmeabschnitt 24c auf. Das erste Innengehäuseelement 18c bildet gemeinsam mit dem zweiten Innengehäuseelement 20c im montierten Zustand im Aufnahmeabschnitt 24c einen hohlen Aufnahmezapfen 30c. Der Aufnahmeabschnitt 24c, insbesondere der hohle Aufnahmezapfen 30c, ist dazu vorgesehen, ein Fixierelement 26c aufzunehmen.

Das Innengehäuse 16c weist ein Verstärkungselement 44c auf. Das Verstärkungselement 44c ist als eine Metallhülse ausgebildet. Das Verstärkungselement 44c ist im montierten Zustand im Aufnahmeabschnitt 24c zwischen dem ersten Innengehäuseelement 18c und dem zweiten Innengehäuseelement 20c, insbesondere innerhalb des Aufnahmezapfens 30c, angeordnet.

Das Fixierelement 26c weist eine Kabelkralle 38c auf. Die Kabelkralle 38c verkrallt im montierten Zustand einen Kabelmantel 40c eines Kabels 36c. Die Kabelkralle 38c ist als ein radialer Vorsprung im Inneren des Fixierelements 26c ausgebildet. Das Fixierelement 26c weist im gezeigten Beispiel zwei Bereiche mit unterschiedlichen Durchmessern auf. Die Kabelkralle 38c ist in einem einer Steckseite des Steckerverbinders 12c gegenüberliegenden Ende des Steckerverbinders 12c angeordnet.

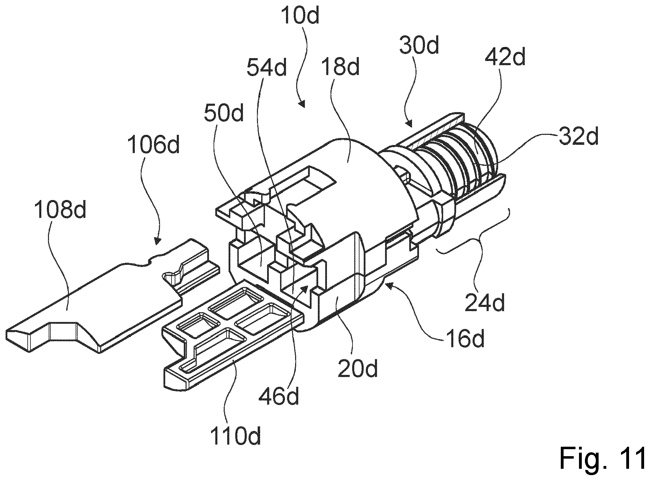

Figur 11 zeigt eine Steckverbindervorrichtung 10d eines weiteren Ausführungsbeispiels der Erfindung. Die Steckverbindervorrichtung 10d weist ein Innengehäuse 16d auf. Das Innengehäuse 16d weist ein erstes Innengehäuseelement 18d auf. Zudem weist das Innengehäuse 16d ein zweites Innengehäuseelement 20d auf.

Das Innengehäuse 16d weist eine Zentriereinheit 106d auf. Die Zentriereinheit 106d dient zur Zentrierung bei einer Montage der Steckverbindervorrichtung 10d, insbesondere zur Zentrierung von Steckerelementen der Steckverbindervorrichtung 10d. Insbesondere verhindert die Zentriereinheit 106d eine falsch ausgerichtete Steckverbindung.

Ein erstes Zentrierelement 108d der Zentriereinheit 106d ist an dem ersten Innengehäuseelement 18d angeordnet. Ein zweites Zentrierelement 110d der Zentriereinheit 106d ist an dem zweiten Innengehäuseelement 20d angeordnet.

Das erste Zentrierelement 108d und das zweite Zentrierelement 110d sind jeweils abnehmbar ausgebildet. Im dargestellten Beispiel verrasten das erste Zentrierelement 108d und das zweite Zentrierelement 110d im montierten Zustand jeweils am ersten Innengehäuseelement 18d und am zweiten Innengehäuseelement 20d. Alternativ könnte das erste Zentrierelement 108d und das zweite Zentrierelement 110d einstückig mit dem ersten Innengehäuseelement 18d und dem zweiten Innengehäuseelement 20d verbunden sein.

Die Ausgestaltung der Zentriereinheit 106d ist nicht auf das vorliegende Ausführungsbeispiel beschränkt. Insbesondere kann die modulare Zentriereinheit Teil der Steckverbindervorrichtungen 10a-c der vorhergehenden Ausführungsbeispiele sein.

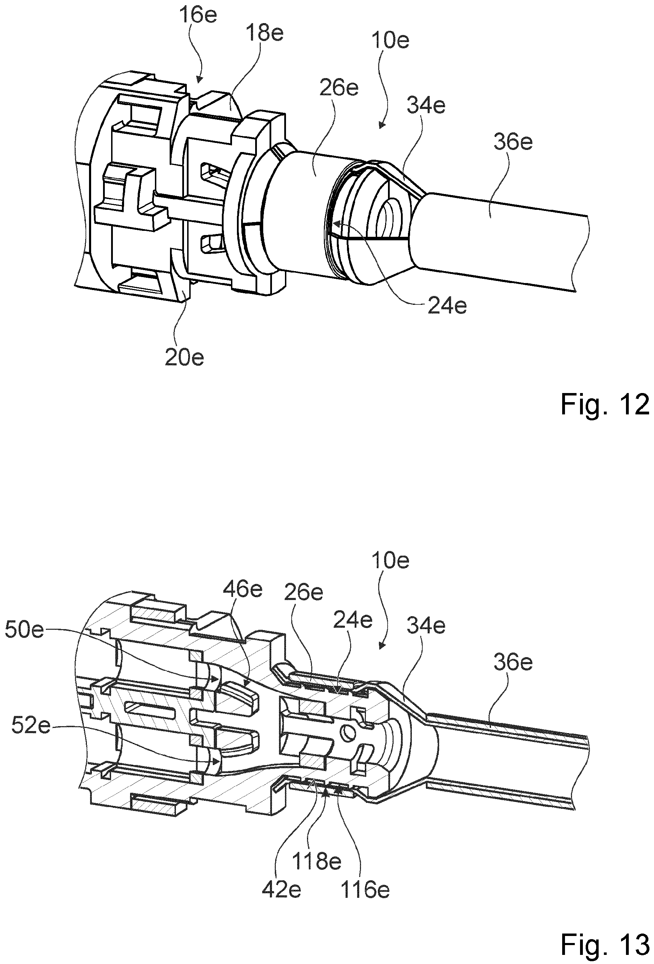

Figuren 12 bis 15 zeigen eine Steckverbindervorrichtung 10e eines weiteren Ausführungsbeispiels der Erfindung. Die Steckverbindervorrichtung 10e unterscheidet sich von den Steckverbindervorrichtungen der vorherigen Ausführungsbeispiele der Erfindung hinsichtlich eines Fixierelements 26e der Steckverbindervorrichtung 10e. Insbesondere ist die im Folgenden beschriebene Ausgestaltung des Fixierelements 26e ebenso auf die Steckverbindervorrichtungen der vorherigen Ausführungsbeispiele anwendbar.

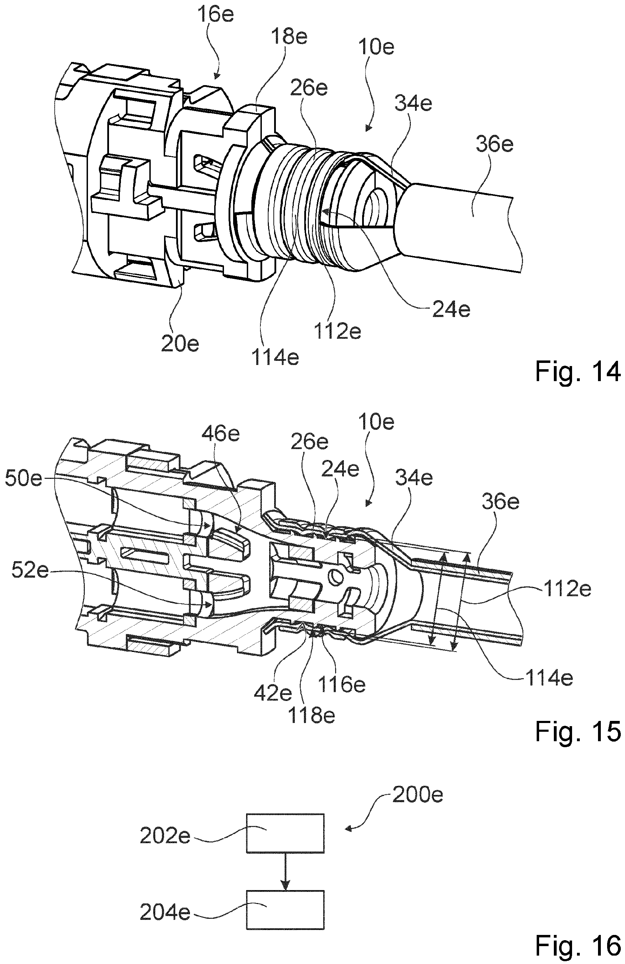

Figuren 12 und 13 zeigen einen Teil der Steckverbindervorrichtung 10e mit dem Fixierelement 26e in einem vormontierten Zustand, das heißt einem vorgekrimpten Zustand. Figuren 14 und 15 zeigen den Teil der Steckverbindervorrichtung 10e mit dem Fixierelement 26e in einem montierten Zustand, das heißt einem fertig gekrimpten Zustand. Das Fixierelement 26e weist im vormontierten Zustand und im montierten Zustand (vgl. Figuren 12 bis 15) einen ersten Querschnitt 112e mit einem ersten Innendurchmesser auf. Zudem weist das Fixierelement 26e im montierten Zustand zumindest einen zweiten Querschnitt 114e mit einem von dem ersten Innendurchmesser wesentlich verschiedenen zweiten Innendurchmesser auf (vgl. Figuren 14 und 15). In dem dargestellten Beispiel ist der erste Innendurchmesser des ersten Querschnitts 112e um 16% größer als der zweite Innendurchmesser des zweiten Querschnitts 114e. Zwischen dem Fixierelement 26e und eines Aufnahmeabschnitts 24e eines ersten Innengehäuseelements 18e und/oder eines zweiten Innengehäuseelements 20e der Steckverbindervorrichtung 10e ist ein Festigkeitselement 34e eines Kabels 36e angeordnet.

Figur 16 zeigt ein Verfahren 200e zur Herstellung einer Steckverbindervorrichtung 10e. In einem ersten Schritt 202e des Verfahrens 200e wird ein Fixierelement 26e der Steckverbindervorrichtung 10e mittels einer ersten Krimpstufe an ein Außenmaß 116e einer Fixierkontur 42e eines Aufnahmeabschnitts 24e eines ersten Innengehäuseelements 18e und/oder eines zweiten Innengehäuseelements 20e der Steckverbindervorrichtung 10e gekrimpt (vgl. zudem Figuren 12 und 13). In dem ersten Schritt 202e wird zudem ein Festigkeitselement 34e eines Kabels 36e zwischen der Fixierkontur 42e und dem Aufnahmeabschnitt 24e angeordnet.

In einem zweiten Schritt 204e des Verfahrens 200e wird das Fixierelement 26e mittels einer zweiten Krimpstufe an ein Innenmaß 118e der Fixierkontur 42e gekrimpt (vgl. zudem Figuren 14 und 15).

### Bezugszeichen

- 10: Steckverbindervorrichtung
- 12: Steckverbinder
- 14: Außengehäuse
- 16: Innengehäuse
- 18: erstes Innengehäuseelement
- 20: zweites Innengehäuseelement
- 22: Steckerelement
- 24: Aufnahmeabschnitt
- 26: Fixierelement
- 28: Axialrichtung
- 30: Aufnahmezapfen
- 32: Anlagefläche
- 34: Festigkeitselement
- 36: Kabel
- 38: Kabelkralle
- 40: Kabelmantel
- 42: Fixierkontur
- 44: Verstärkungselement
- 46: Führungseinheit
- 48: Leitungselement
- 50: Führungsteilkanal
- 52: Zweiter Führungsteilkanal
- 54: Weiteres Leitungselement
- 56: Muffe
- 58: Innengewinde
- 60: Kabelverschraubung
- 62: Werkzeugaufnahme
- 64: Außengewinde
- 66: Dichtelement
- 68: Kabelbinder
- 70: Hülse
- 72: Schiebemuffe
- 74: Nut
- 76: Betätigungselement
- 78: Stift
- 80: Halteelement
- 82: Anschlusskabel
- 84: Kodierungsmittel
- 86: Federelement
- 88: O-Ring
- 90: Ausnehmung
- 92: Verschluss
- 94: Befestigungsmittel
- 96: Erster Teilzapfen
- 98: Zweiter Teilzapfen
- 100: Rastmittel
- 102: Fase
- 104: Weitere Fixierkontur
- 106: Zentriereinheit
- 108: Zentrierelement
- 110: Weiteres Zentrierelement
- 112: Erster Querschnitt
- 114: Zweiter Querschnitt
- 116: Außenmaß
- 118: Innenmaß
- 200: Verfahren
- 202: Erster Schritt
- 204: Zweiter Schritt

## Patentansprüche

1. Steckverbindervorrichtung (10a; 10b; 10c; 10d; 10e), insbesondere optische Steckverbindervorrichtung, mit einem Außengehäuse (14a) und mit einem Innengehäuse (16a; 16b; 16c; 16d; 16e), welches zumindest ein erstes Innengehäuseelement (18a; 18b; 18c; 18d; 18e) und zumindest ein zweites Innengehäuseelement (20a; 20b; 20c; 20d; 20e) aufweist, welche in einem montierten Zustand gemeinsam dazu vorgesehen sind, zumindest ein Steckerelement (22a; 22b; 22c; 22d) aufzunehmen, **dadurch gekennzeichnet, dass** das erste Innengehäuseelement (18a; 18b; 18c; 18d; 18e) und das zweite Innengehäuseelement (20a; 20b; 20c; 20d; 20e) zumindest einen Aufnahmeabschnitt (24a; 24b; 24c; 24d; 24e) aufweisen, welcher zu einer Aufnahme eines Fixierelements (26a; 26b; 26c; 26d; 26e) vorgesehen ist.

2. Steckverbindervorrichtung (10a; 10b; 10c; 10d; 10e) nach Anspruch 1,
**dadurch gekennzeichnet, dass** das erste Innengehäuseelement (18a; 18b; 18c; 18d; 18e) und das zweite Innengehäuseelement (20a; 20b; 20c; 20d; 20e) jeweils als Innengehäusehalbschalen ausgebildet sind, welche in dem montierten Zustand entlang einer Axialrichtung (28a; 28b; 28c; 28d; 28e) miteinander verbunden sind.

3. Steckverbindervorrichtung (10a; 10b; 10c; 10d; 10e) nach Anspruch 1 oder 2, **dadurch gekennzeichnet, dass** das erste Innengehäuseelement (18a; 18b; 18c; 18d; 18e) und das zweite Innengehäuseelement (20a; 20b; 20c; 20d; 20e) zumindest im Aufnahmeabschnitt (24a; 24b; 24c; 24d; 24e) eine sich zumindest im Wesentlichen ergänzende Geometrie aufweisen.

4. Steckverbindervorrichtung (10a; 10b; 10c; 10d; 10e) nach einem der vorhergehenden Ansprüche, **dadurch gekennzeichnet, dass** das erste Innengehäuseelement (18a; 18b; 18c; 18d; 18e) gemeinsam mit dem zweiten Innengehäuseelement (20a; 20b; 20c; 20d; 20e) im montierten Zustand im Aufnahmeabschnitt (24a; 24b; 24c; 24d; 24e) einen hohlen Aufnahmezapfen (30a; 30b; 30c; 30d; 30e) bildet.

5. Steckverbindervorrichtung (10a; 10b; 10c; 10d; 10e) nach einem der vorhergehenden Ansprüche, **dadurch gekennzeichnet, dass** das Innengehäuse (16a; 16b; 16c; 16d; 16e) in dem Aufnahmeabschnitt (24a; 24b; 24c; 24d; 24e) eine Anlagefläche (32a; 32b; 32c; 32d; 32e) für ein Festigkeitselement (34a; 34b; 34c; 34d) eines Kabels (36a; 36b; 36c; 36d; 36e) aufweist.

6. Steckverbindervorrichtung (10a; 10b; 10c; 10d; 10e) nach einem der vorhergehenden Ansprüche, **gekennzeichnet durch** das Fixierelement (26a; 26b; 26c; 26d; 26e), welches im montierten Zustand das erste Innengehäuseelement (18a; 18b; 18c; 18d; 18e) und das zweite Innengehäuseelement (20a; 20b; 20c; 20d; 20e) zumindest teilweise umgreift und miteinander verbindet.

7. Steckverbindervorrichtung (10a; 10b; 10c; 10d; 10e) nach den Ansprüchen 5 und 6, **dadurch gekennzeichnet, dass** das Fixierelement (26a; 26b; 26c; 26d; 26e) im montierten Zustand dazu vorgesehen ist, das Festigkeitselement (34a; 34b; 34c; 34d) an die Anlagefläche (32a; 32b; 32c; 32d; 32e) zu drücken.

8. Steckverbindervorrichtung (10c) nach Anspruch 6 oder 7, **dadurch gekennzeichnet, dass** das Fixierelement (26c) eine Kabelkralle (38c) aufweist, welche dazu vorgesehen ist, einen Kabelmantel (40c) zu verkrallen.

9. Steckverbindervorrichtung (10a; 10b; 10c; 10d; 10e) nach einem der vorhergehenden Ansprüche, **dadurch gekennzeichnet, dass** das erste Innengehäuseelement (18a; 18b; 18c; 18d; 18e) und/oder das zweite Innengehäuseelement (20a; 20b; 20c; 20d; 20e) im montierten Zustand im Aufnahmeabschnitt (24a; 24b; 24c; 24d; 24e) zumindest eine Fixierkontur (42a; 42b; 42c; 42d; 42e) aufweist.

10. Steckverbindervorrichtung (10e) zumindest nach den Ansprüchen 6 und 9, **dadurch gekennzeichnet, dass** das Fixierelement (26e) im montierten Zustand einen ersten Querschnitt (112e) mit einem ersten Innendurchmesser und zumindest einen zweiten Querschnitt (114e) mit einem von dem ersten Innendurchmesser wesentlich verschiedenen zweiten Innendurchmesser aufweist.

11. Steckverbindervorrichtung (10b; 10c) nach einem der vorhergehenden Ansprüche, **gekennzeichnet durch** zumindest ein Verstärkungselement (44b; 44c), welches im montierten Zustand im Aufnahmeabschnitt (24b; 24c) zwischen dem ersten Innengehäuseelement (18b; 18c) und dem zweiten Innengehäuseelement (20b; 20c), insbesondere innerhalb des Aufnahmezapfens (30b; 30c), angeordnet ist.

12. Steckverbindervorrichtung (10a; 10b; 10c; 10d; 10e) zumindest nach dem Oberbegriff von Anspruch 1 und insbesondere nach einem der vorhergehenden Ansprüche, **dadurch gekennzeichnet, dass** das Innengehäuse (16a; 16b; 16c; 16d; 16e) wenigstens eine Führungseinheit (46a; 46b; 46c; 46d; 46e) aufweist, welche dazu vorgesehen ist, zumindest ein Leitungselement (48a) zu führen.

13. Steckverbindervorrichtung (10a; 10b; 10c; 10d; 10e) nach Anspruch 12, **dadurch gekennzeichnet, dass** die Führungseinheit (46a; 46b; 46c; 46d; 46e) dazu vorgesehen ist, einen Krümmungsradius des Leitungselements (48a) im Innengehäuse (16a; 16b; 16c; 16d; 16e) auf einen Mindestradius zu begrenzen.

14. Steckverbindervorrichtung (10a; 10b; 10c; 10d; 10e) nach Anspruch 13, **dadurch gekennzeichnet, dass** das erste Innengehäuseelement (18a; 18b; 18c; 18d; 18e) und das zweite Innengehäuseelement (20a; 20b; 20c; 20d; 20e) jeweils einen Führungsteilkanal (50a; 50b; 50c; 50d; 50e) zur Führung des Leitungselements (48a), insbesondere zu dem Steckerelement (22a; 22b; 22c), umfassen.

15. Steckverbindervorrichtung (10a; 10b; 10c; 10d) nach Anspruch 14,
**dadurch gekennzeichnet, dass** das erste Innengehäuseelement (18a; 18b; 18c; 18d) und/oder das zweite Innengehäuseelement (20a; 20b; 20c; 20d) in dem Führungsteilkanal (50a; 50b; 50c; 50d) mindestens ein Halteelement (80a; 80b; 80c) zum Halten des Leitungselements (48a) in dem Führungsteilkanal (50a; 50b; 50c; 50d) aufweisen.

16. Steckverbindervorrichtung (10a; 10b; 10c; 10d; 10e) nach Anspruch 14 oder 15, **dadurch gekennzeichnet, dass** das erste Innengehäuseelement (18a; 18b; 18c; 18d; 18e) und das zweite Innengehäuseelement (20a; 20b; 20c; 20d; 20e) jeweils einen zweiten Führungsteilkanal (52a; 52b; 52c; 52d; 52e) zur Führung eines weiteren Leitungselements (54a), insbesondere zu dem Steckerelement (22a; 22b; 22c), umfassen.

17. Steckverbinder (12a), insbesondere optischer Steckverbinder, mit zumindest einer Steckverbindervorrichtung (10a; 10b; 10c; 10d; 10e) nach einem der vorhergehenden Ansprüche.

18. Anschlusskabel (82a), insbesondere optisches Anschlusskabel, mit zumindest einem Steckverbinder (12a) nach Anspruch 17 und einem Kabel (36a; 36e), welches mit dem Steckverbinder (12a) konfektioniert ist.

19. Verfahren (200e) zur Herstellung einer Steckverbindervorrichtung (10e) zumindest nach Anspruch 10, wobei das Fixierelement (26e) in einem ersten Schritt (202e) mittels einer ersten Krimpstufe an ein Außenmaß (116e) der Fixierkontur (42e) gekrimpt wird, **dadurch gekennzeichnet, dass** das Fixierelement (26e) in einem zweiten Schritt (204e) mittels einer zweiten Krimpstufe an ein Innenmaß (118e) der Fixierkontur (42e) gekrimpt wird.
